# EUROPEAN PATENT APPLICATION

(11) **EP 1 767 951 A2**
(43) Date of publication of application: **28.03.2007**
(21) Application number: 06020328.8
(22) Date of filing: 27.09.2006
(51) Int. Cl.: G01N 35/10, G01N 1/00, G01N 33/483

(54) **Sample analyzer**

(30) Priority: 27.09.2005 JP 2005280960
(71) Applicant: HORIBA, LTD., Kyoto (JP)
(72) Inventor: Oku, Narihiro, Minami-ku, Kyoto-City, Kyoto (JP); Ohnishi, Toshikazu, Minami-ku, Kyoto-City, Kyoto (JP); Naya, Hiroshi, Minami-ku, Kyoto-City, Kyoto (JP); Matsumoto, Masaharu, Minami-ku, Kyoto-City, Kyoto (JP)
(74) Representative: Müller - Hoffmann & Partner

(57) **Abstract**

The present invention has been made to simplify assembly and maintenance of a sample analyzer (1) including a flow passageway (3) that flows fluid, such as a sample, air, or the like; one or more fluid control units (5) that control the flow of the fluid on the flow passageway (3); a measurement cell (41) that is provided on the flow passageway (3); a sample analysis part (6) that analyzes the sample inside the measurement cell (41); and a casing (7) that holds these parts mentioned above. At least one of the fluid control units (5) is formed by unitizing functions related to fluid control; integrally has a manifold (502) that forms an internal flow path (501), one or more control valves (503) that control flow of the fluid in the internal flow path (501) and connection ports (504) for connecting together the internal flow path (501) and the flow passageway (3); and is so configured as to be removable from the casing (7).

## Description

### Field of the Invention

The present invention relates to a sample analyzer that analyzes components, such as, for example, red blood cells, white blood cells, or platelets, which are contained in a blood specimen.

### Description of the Background Art

For example, a conventional blood analyzer is provided with: as shown in patent document 1, a sampling nozzle for suctioning a blood specimen inside a blood collection tube, a measurement cell, a hemolysis reagent vessel, a waste solution vessel, a syringe pump unit and an air pump for liquid movement and the like. These parts are linked together by pipes, which are provided with electromagnetic control valves for controlling flow of the blood specimen, a hemolysate, or the like.

However, in such a blood analyzer, each of the parts described above, the pipes, and the electromagnetic control valve are provided independently, thus resulting in an increase in the number of pipes and an increase in the number of connection points between the pipe and each part, which leads to a problem of considerable labor required upon assembly. Moreover, in such a blood analyzer, even in the event of the need for removal of only one portion due to, for example, malfunction or the like, many of the pipes need to be removed to remove the portion, which leads to a problem of considerable labor required for this operation.

Further, the electromagnetic control valves are provided on the pipes independently from the respective parts described above; thus, even in the event of replacement of only one portion desired for aging, operation check such as aging or the like need to be performed for the entire analyzer, which leads to a problem of considerable labor required for this operation.

Patent Document 1: Japanese Unexamined Patent Publication No. 2004-4098

### Summary of the invention

Accordingly, to solve the problems described above all at once, the present invention has been made, and it is a main desired object of the invention to simplify assembly and maintenance of the analyzer.

The object underlying the present invention is achieved according to the present invention by a sample analyzer according to independent claim 1. Preferred embodiments are within the scope of the dependent claims.

A sample analyzer according to one aspect of the present invention includes: a flow passageway that flows fluid, such as a sample, air, or the like; one or more fluid control units that control the flow of the fluid on the flow passageway; a measurement cell that is provided on the flow passageway; a sample analysis part that analyzes the sample inside the measurement cell; and a casing that holds these parts mentioned above. At least one of the fluid control units is formed by unitizing functions related to fluid control; integrally has a manifold that forms an internal flow path, one or more control valves that control flow of the fluid in the internal flow path, and a connection port for connecting together the internal flow path and the flow passageway; and is so configured as to be removable from the casing.

According to such a configuration, at least one of the fluid control units integrally has one or more control valves and connection ports, thus permitting reduction in the number of pipes connecting between the fluid control units and also permitting simplified assembly of the analyzer and simplified removal of the fluid control units. This also permits operation check, such as aging or the like, to be performed for each of the fluid control units, which no longer requires operation check, such as aging or the like, for the entire analyzer, thus permitting simplified maintenance.

For a detailed embodiment to provide even more remarkable effect of the invention, it is desirable that the fluid control unit include an air pump unit for flowing the air into the flow passageway and a syringe pump unit for moving liquid inside the flow passageway.

Further, it is desirable that the fluid control unit further include a diluting liquid temperature regulation unit that preserves a diluting liquid for diluting the sample and regulates temperature of the diluting liquid.

To provide even more remarkable effect of the present invention to simplify the assembly of the analyzer and the removal of the fluid control units, it is preferable that the casing stores a main wiring for supplying an electrical power to the units, and has a relay connector for electrically connecting together the units and the main wiring, the relay connector being provided near a region where the units are fitted.

For a possible detailed embodiment of the sample, the sample is, for example, a blood specimen.

According to the present invention as described above, at least one of the fluid control units integrally has one or more control valves and connection ports, thus permitting reduction in the number of pipes connecting between the fluid control units and also permitting simplified assembly of the analyzer and simplified removal of the fluid control units. This also permits operation check, such as aging or the like, to be performed for each of the fluid control units, which no longer requires operation check, such as aging or the like, for the entire analyzer, thus permitting simplified maintenance.

### Brief description of the drawings

- **FIG. 1**: is an overall fluid circuit diagram of a blood analyzer according to one embodiment of the present invention;
- **FIG. 2**: is an exploded perspective view of the blood analyzer in the same embodiment;
- **FIG. 3**: is a schematic block diagram showing a nozzle unit and a measurement unit in the same embodiment;
- **FIG. 4**: is an enlarged sectional view showing a connection port in the same embodiment;
- **FIG. 5**: is an enlarged view of an air pump unit portion in the fluid circuit diagram in the same embodiment;
- **FIG. 6**: is an enlarged view of a syringe pump unit portion in the fluid circuit diagram in the same embodiment;
- **FIG. 7**: is an enlarged view of a diluting liquid temperature regulation unit portion in the fluid circuit diagram in the same embodiment;
- **FIG. 8**: is an enlarged view of an isolator unit portion in the fluid circuit diagram in the same embodiment; and
- **FIG. 9**: is a flow chart showing operation of a blood analyzer in the same embodiment.

### Detailed description of the embodiments

Next, a blood analyzer according to one embodiment of a sample analyzer of the present invention will be described referring to the accompanying drawings.

A blood analyzer 1 according to the present embodiment measures, by an electrical resistance method, WBC (white blood cell count), RBC (red blood cell count), PLT (platelet count), MCV (red blood cell volume), and Hct (hematocrit value), and measures (CBC measurement), by an absorption spectrophotometry in a cyanmethemoglobin method, Hgb (hemoglobin concentration) and the like.

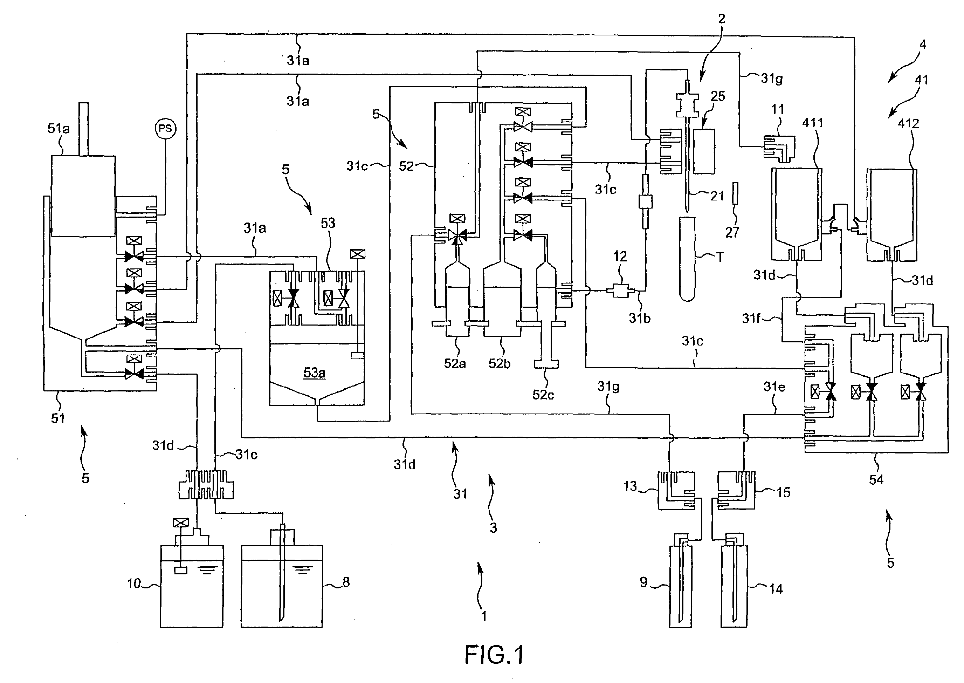

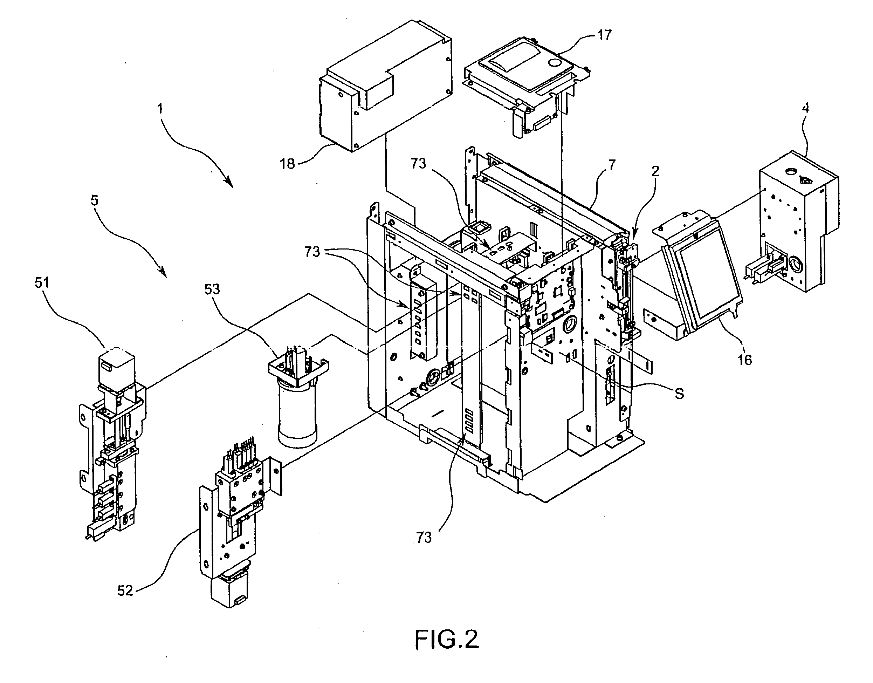

The blood analyzer 1 is constructed, as shown in FIGS. 1 and 2, to be provided with: a nozzle unit 2 having a sampling nozzle 21 that performs operations such as suctioning a blood specimen from a blood collection tube T; a flow passageway 3 that flows fluid, such as the air, the blood specimen, or the like, which has been suctioned by the sampling nozzle 21; a measurement cell 41 that is provided on the flow passageway 3; one or more fluid control units 5 that control fluid flow on the flow passageway 3 ; a blood analysis part 6 that analyzes WBC or the like of a blood specimen inside the measurement cell 41; and a casing 7 that holds these parts mentioned above.

The flow passageway 3 flows mainly the blood specimen, the air, the diluting liquid, the hemolysate, and the like, and is formed of a pipe 31 that couples together the sampling nozzle 21 that suctions the blood specimen or the like, the fluid control units 5, the measurement cell 41, a diluting liquid vessel 8 that stores the diluting liquid, a hemolysate vessel 9 that stores the hemolysate, and the like.

The pipe 31 is composed of: an air flow passage pipe 31a that mainly flows the air; the blood specimen and the like flow passage pipe 31b that flow the blood specimen and a diluting liquid; a diluting liquid flow passage pipe 31c that flows the diluting liquid; a waste solution flow passage pipe 31d that flows a waste solution, such as the blood specimen or the like, which has been already subjected to measurement; a cleaning solution flow passage pipe 31e that flows a cleaning solution; a cleaning solution and the like flow passage pipe 31f that flows the diluting liquid and the cleaning solution; and a hemolysate flow passage pipe 31g that flows the hemolysate.

The measurement cell 41 is provided on the flow passageway 3, and includes a WBC/Hgb measurement cell 411 (hereinafter, simply referred to as a WBC cell) for measuring WBC (white blood cell count) and Hgb (hemoglobin concentration); a RBC/PLT measurement cell 412 (hereinafter, simply referred to as a RBC cell) for measuring RBC (red blood cell count) and PLT (platelet count). The measurement cell 41 is so unitized as to be integrated with a blood measurement part 42 to be described later, forming a measurement unit 4, and is so configured as to be removable from the casing 7.

In the WBC cell 411, the blood specimen is injected by the sampling nozzle 21, is subjected to a primary dilution by the diluting liquid from the diluting liquid vessel 8, and then a hemolysate inside the hemolysate vessel 9 is injected via a syringe pump unit 52 and an isolator unit 54, and then the WBC and the Hgb are measured. In the RBC cell 412, the blood specimen already subjected to the primary dilution is injected by the sampling nozzle 21, is further subjected to a secondary dilution by the diluting liquid from the diluting liquid vessel 8, and then the RBC and the PLT are measured.

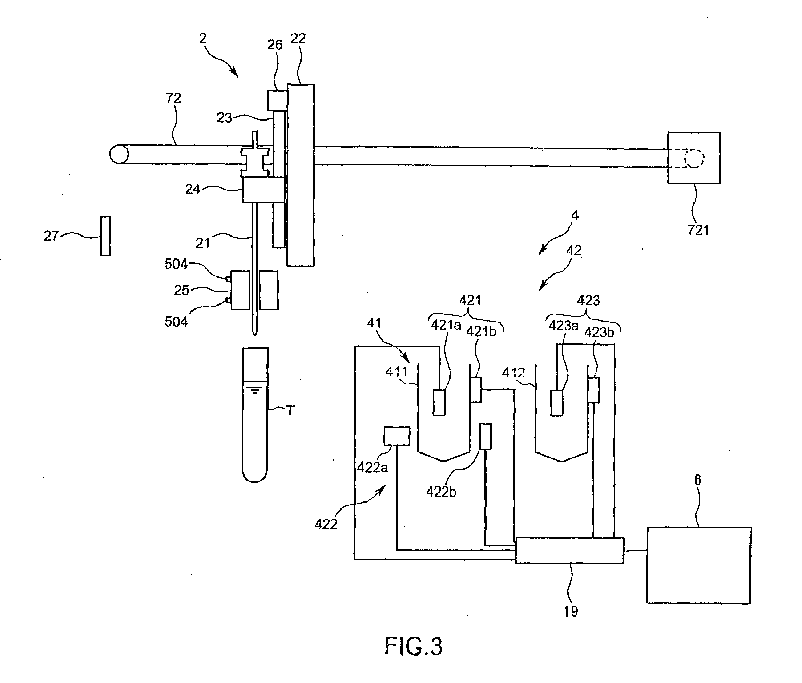

The blood measurement part 42 includes: as shown in FIG. 3, a WBC measurement part 421, an Hgb measurement part 422, and a RBC/PLT measurement part 423. The WBC measurement part 421 measures the WBC with electrodes 421a and 421b of, for example, platinum electrodes or the like, provided at the WBC cell 411. The Hgb measurement part 422 measures the Hgb with a light source 422a of a halogen lamp or the like provided outside the WBC cell 411 and a light detector 422b that detects light transmitted through the WBC cell 411. The RBC/PLT measurement part 423 measures the RBC/PLT with electrodes 423a and 423b of, for example, platinum electrodes or the like, provided at the RBC cell 412.

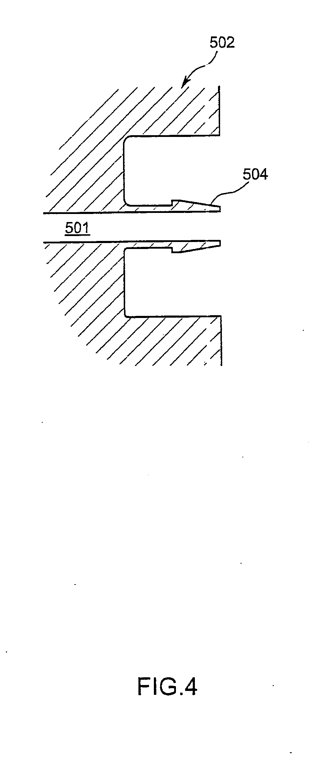

The fluid control unit 5 is formed by unitizing functions related to fluid control, and integrally has: a manifold 502 that forms an internal flow path 501; one or more related electromagnetic control valves 503 that control flow of the fluid in the internal flow path 501; and a connection port 504 for connecting together the internal flow path 501 and the flow passageway 3 (see FIG. 4). The fluid control unit 5 is so configured as to be removable from the casing 7. Note that the manifold 502 is a block including the internal path 501.

The blood analysis part (sample analysis part) 6, based on measurement data from the blood measurement part 42, analyzes the WBC, RBC, PLT, MCV, and Hct of the blood specimen inside the measurement cell 41. The blood analysis part 6 is formed of a general-purpose or dedicated computer including a CPU, an internal memory, an external memory, an input-output interface, an AD converter, and the like. The CPU, its peripheral devices, and the like operate based on a program stored in a predetermined region of the internal memory or the external memory whereby the WBC, RBC, PLT, MCV, and Hct of the blood specimen inside the measurement cell 41 are measured.

Specifically, the fluid control units 5 of the present embodiment includes: an air pump unit 51 that controls an air flow and a waste solution flow inside the flow passageway 3; a syringe pump unit 52 that controls liquid flow inside the flow passageway 3; a diluting liquid temperature regulation unit 53 that preserves the diluting liquid for diluting the blood specimen and regulates the temperature of the diluting liquid; and an isolator unit 54 that includes the internal flow path 501 for flowing the cleaning solution and the internal flow path 501 for flowing the waste solution which are divided from each other.

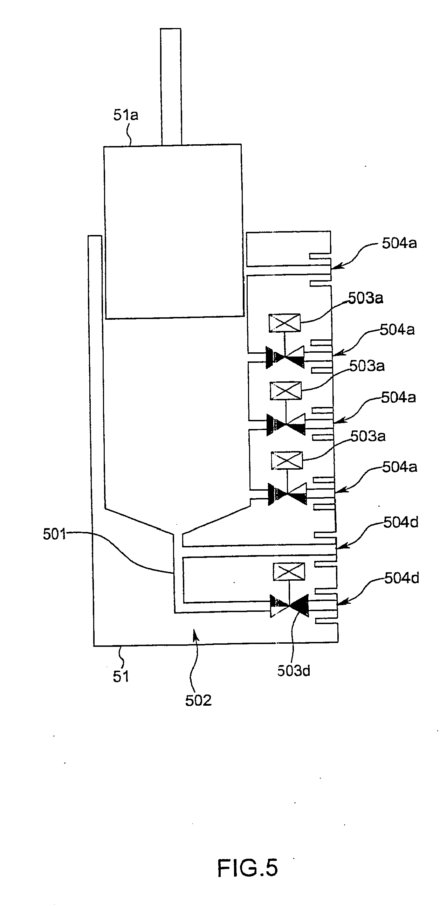

The air pump unit 51, as shown in FIGS. 1 and 5, controls the air flow and the waste solution flow inside the flow passageway 3, and is linked to the diluting liquid temperature regulation unit 53 to be described later, the RBC cell 412, a nozzle cleaner 25, the isolator unit 54, and a waste solution vessel 10. Specifically, the air pump unit 51 integrally has: the manifold 502 that forms the internal flow path 501 including an air cylinder 51a; three electromagnetic control valves 503a for controlling the air flow; one electromagnetic control valve 503d for controlling the waste solution flow; three connection ports 504a that connect together the internal flow path 501 and the air flow passage pipe 31a: and two connection ports 504d that connect together the internal flow path 501 and the waste solution flow passage pipe 31d.

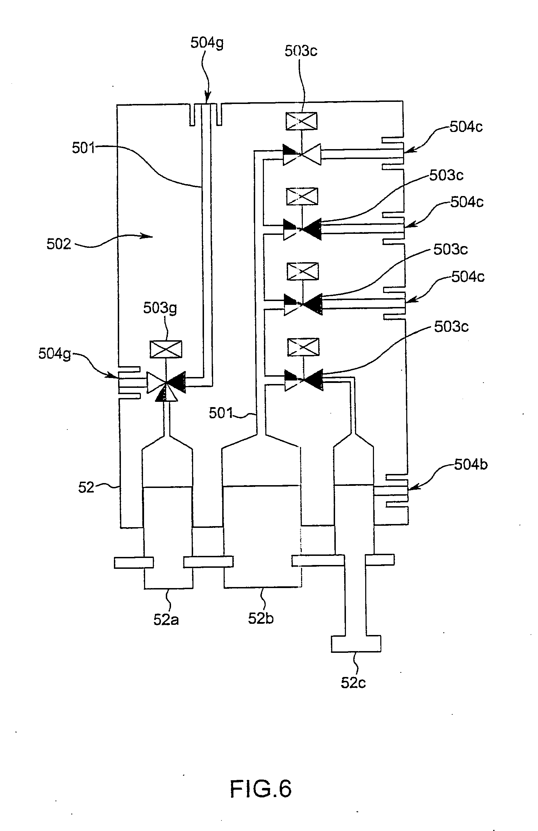

The syringe pump unit 52, as shown in FIGS. 1 and 6, controls the liquid flow inside the flow passageway 3, and is linked to the sampling nozzle 21, the isolator unit 54, the nozzle cleaner 25, the diluting liquid temperature regulation unit 53, the hemolysate vessel 9, and an injection (filling) block 11 for injecting the hemolysate into the WBC cell 411. Specifically, the syringe pump unit 52 integrally has: the manifold 502 that forms the internal flow path 501 including a blood specimen dispensing part 52a, a diluting liquid dispensing part 52b, and a hemolysate dispensing part 52c; one electromagnetic control valve 503g as a three-way switching valve for controlling hemolysate flow; four electromagnetic control valves 503c for controlling a diluting liquid flow; two connection ports 504g that connect together the internal flow path 501 and the hemolysate flow passage pipe 31g; three connection ports 504c that connect together the internal flow path 501 and the diluting liquid flow passage pipe 31c; one connection port 504b that connects together the internal flow path 501 and the blood specimen and the like flow passage pipe 31 b. In addition, the blood specimen and the like flow passage pipe 31b linking together the syringe pump unit 52 and the sampling nozzle 21 is provided with a temperature sensor 12. The hemolysate flow passage pipe 31g linking together the syringe pump unit 52 and the hemolysate vessel 9 is provided with a liquid quantity sensor 13.

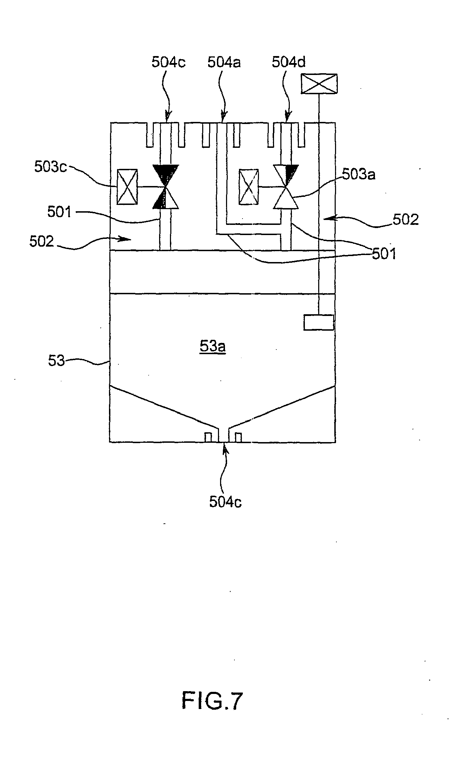

The diluting liquid temperature regulation unit 53, as shown in FIGS. 1 and 7, preserves the diluting liquid for diluting the blood specimen and regulates the temperature of this diluting liquid, and is linked to the air pump unit 51, the diluting liquid vessel 8, and the syringe pump unit 52. Specifically, the diluting liquid temperature regulation unit 53 integrally has: a diluting liquid storage part 53a for storing the diluting liquid; the manifold 502 that forms the internal flow path 501 for preserving the diluting liquid in the diluting liquid storage part 53a; one electromagnetic control valve 503c that controls the diluting liquid flow; one electromagnetic control valve 503a for discharging the air to the outside; one connection port 504a that connects together the internal flow path 501 and the air flow passage pipe 31a; and two connection ports 504c that connect together the internal flow path 501 and the diluting liquid flow passage pipe 31 c.

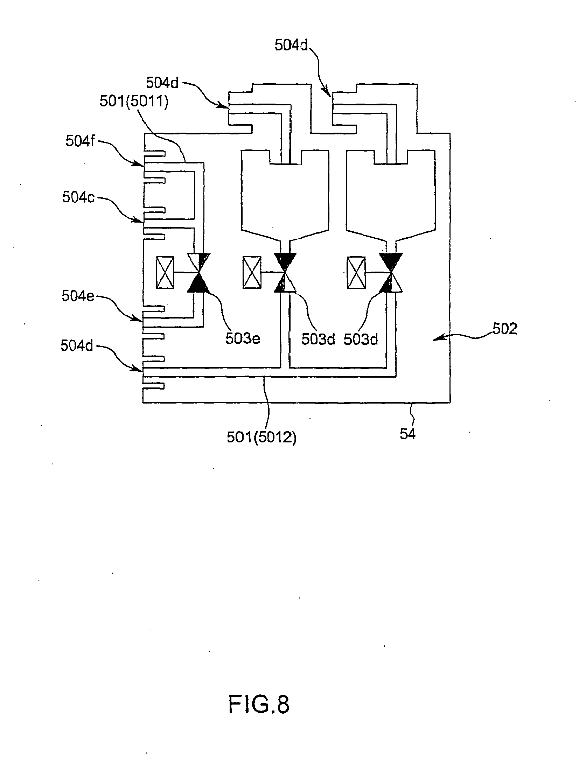

The isolator unit 54, as shown in FIGS. 1 and 8, includes an internal flow path 5011 for flowing the cleaning solution and an internal flow path 5012 for flowing the waste solution which are divided from each other, and is linked to the WBC cell 411, the RBC cell 412, the syringe pump unit 52, the cleaning solution vessel 14, and the air pump unit 51. Specifically, the isolator unit 54 integrally has: two manifolds 502 that form the internal flow paths 501; two electromagnetic control valves 503d that control a waste solution flow; one electromagnetic control valve 503e that controls the cleaning solution flow; three connection ports 504d that connect together the internal flow path 501 and the waste solution flow passage pipe 31d; one connection port 504e that connects together the internal flow path 501 and the cleaning solution flow passage pipe 31e; one connection port 504c that connects together the internal flow path 501 and the diluting liquid flow passage pipe 31 c; and one connection port 504f that connects together the internal flow path 501 and the cleaning solution and the like flow passage pipe 31f. In addition, the cleaning solution flow passage pipe 31e linking together the isolator unit 54 and the cleaning solution vessel 14 is provided with a liquid quantity sensor 15.

The blood analyzer 1 according to this embodiment, as shown in FIGS. 1 and 2, has the following units 2, 16, 17, and 18 which are removably provided to the casing 7.

Namely, the blood analyzer 1 includes: the nozzle unit 2 that has the sampling nozzle 21; a screen display unit 16 that displays operation details, measurement results, or the like; a printer unit 17 for printing out the measurement results; and a power supply unit 18 that serves as a power supply source of the blood analyzer 1. The power supply unit 18 is so configured as to store a power source in the case, and the space in which this power source is stored is separated from the space in which the other units 2, 5, 16, and 17 are stored so that heat generated by the power source dose not harm the peripheral units 2, 5, 16, and 17.

The nozzle unit 2, as shown in FIG. 3, is so configured as to be capable of reciprocating horizontally by a first timing belt 72 that is provided horizontally in such a manner as to extend along a base member, not shown, perpendicularly provided at the casing 7. The nozzle unit 2 is provided with: a housing 22 that is fixed to the first timing belt 72 and reciprocates horizontally; a second timing belt 23 vertically provided at the housing 22; the sampling nozzle 21 that suctions and discharges the blood specimen or the like; and a nozzle holding part 24 that holds the sampling nozzle 21 and is moved up-and-down by the second timing belt 23. The first timing belt 72 is driven by a motor 721.

The sampling nozzle 21 is inserted in the nozzle cleaner 25 provided in the nozzle unit 2 so that the outer circumferential surface of its tip end can be cleaned. This nozzle cleaner 25 is provided with two connection ports 504, one of which is connected to the air flow passage pipe 31a for linking it to the air pump unit 51 and the other one of which is connected to the diluting liquid flow passage pipe 31c for linking it to the syringe pump unit 52. Moreover, the sampling nozzle 21 is coupled to the syringe pump unit 52 by the blood specimen and the like flow passage pipe 31b. Numeral 26 denotes a motor for driving the second timing belt, and numeral 27 denotes a sensor for detecting whether or not the sampling nozzle 21 is at the initial position (home position).

The casing 7 of the blood analyzer 1 according to the present embodiment, as shown in FIG. 2, stores a main wiring, not shown, for supplying an electrical power to each of the units 5, 2, 16, 17, and 18 described above, and has, in regions where the units 5, 2, 16, 17, and 18 are respectively fitted, relay connectors 73 that electrically connect the respective units 5, 2, 16, 17, and 18 to the main wiring. For the fluid control unit 5, in particular, the relay connector 73 is provided near the region where this fluid control unit 5 is fitted.

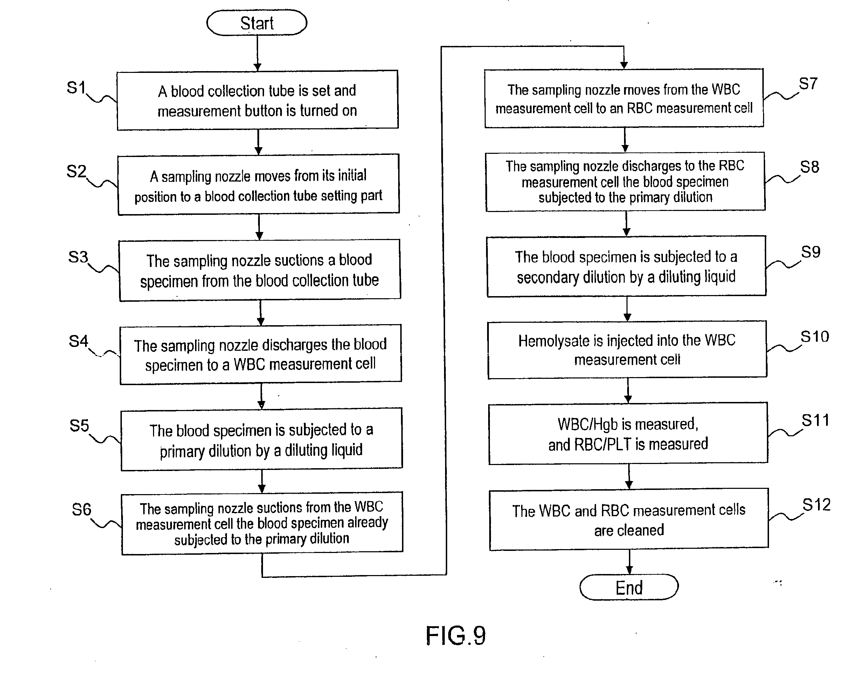

Next, the operation of the blood analyzer 1 configured as described above will be described with reference to FIG. 9.

First, the blood collection tube T storing blood is set at a blood collection tube setting part and a measurement button is turned on (step S1), whereby the sampling nozzle 21 located at the initial position moves to the position of the blood collection tube setting part (step S2) and suctions the blood specimen (whole blood) inside the blood collection tube T (step S3). After this suction of the specimen, the sampling nozzle 21 moves to the position of the WBC cell 411, the diluting liquid is supplied to the nozzle cleaner 25, and then the outer surface of the sampling nozzle 21 is cleaned.

The sampling nozzle 21, which has already undergone the above-mentioned cleaning, discharges the blood specimen into the WBC cell 411 (step S4), while a predetermined quantity of diluting liquid inside the diluting liquid vessel 8 is injected into the WBC cell 411 by the air pump unit 51 via the isolator unit 54 whereby the primary dilution of the blood specimen is performed (step S5).

The sampling nozzle 21 located at the position of the WBC cell 411 suctions a predetermined quantity of the blood specimen already subjected to the primary dilution (step S6), moves to the RBC cell 412 (step S7), and discharges to the RBC cell 412 the suctioned blood specimen already subjected to the primary dilution (step S8). Then, a predetermined quantity of diluting liquid inside the diluting liquid vessel 8 is injected into the RBC cell 412 by the air pump unit 51 via the isolator unit 54 whereby the secondary dilution of the blood specimen is performed (step S9).

After the primary dilution and the secondary dilution mentioned above are completed, a predetermined quantity of hemolysate inside the hemolysate vessel 9 is injected into the WBC cell 411 via the syringe pump unit 52 and the isolator unit 54 (step S10), and the WBC and the Hgb are measured while, in the RBC cell 412, the RBC and the PLT are measured (step S11). Measurement data obtained through these measurements is outputted to the blood analysis part 6 via a signal processor 19.

The blood analysis part 6, based on the measurement data from the blood measurement part 42, calculates the WBC, RBC, PLT, MCV, and Hct.

After the measurements are completed, the WBC cell 411 and the RBC cell 412 are cleaned by the diluting liquid and the cleaning solution (step S12) .

According to the blood analyzer 1 of the present embodiment configured as described above, the fluid control units 5 (the air pump unit 51, the syringe pump unit 52, the diluting liquid temperature regulation unit 53, and the isolator unit 54) each integrally have one or more control valves 503 and connection ports 504, thus permitting reduction in the number of pipes connecting between the fluid control units 5 and also permitting simplified assembly of the analyzer 1 and simplified removal of the fluid control units 5. This also permits operation check, such as aging or the like, to be performed for each of the fluid control units 5, which no longer requires operation check, such as aging or the like, for the entire analyzer 1, thus permitting simplified maintenance.

Furthermore, the relay connectors 73, which electrically connect together the main wiring for supplying an electrical power to each of the units 5, 2, 16, 17, and 18 to these respective units, is provided near the regions where the units 5, 2, 16, 17, and 18 are respectively fitted, thus permitting even easier assembly of the analyzer 1 and easier removal of the units 5, 2, 16, 17, and 18. Moreover, a wire harness can be achieved.

The invention is not limited to the embodiment mentioned above.

For example, the blood analyzer of the embodiment mentioned above, which makes CBC measurement, may have a function of making CRP measurement.

Moreover, part or all of the embodiment and modified embodiment mentioned above may be combined as appropriate. The present invention is not limited to the embodiment mentioned above; thus, it is needless to say that various modifications are permitted without departing from the spirit and scope of the present invention.

The present invention may also be described according to the following elucidations:

The present invention relates to a sample analyzer 1 comprising a flow passageway 3 that flows fluid, such as a sample, air, or the like; one or more fluid control units 5 that control the flow of the fluid on the flow passageway 3; a measurement cell 41 that is provided on the flow passageway 3; a sample analysis part 6 that analyzes the sample inside the measurement cell 41; and a casing 7 that holds at least said flow passageway 3, said one or more fluid control units 5, said measurement cell 41, and said sample analysis part 6; wherein at least one of the fluid control units 5 is formed by unitizing functions related to fluid control, integrally has a manifold 502 that forms an internal flow path 501, one or more control valves 503 that control flow of the fluid in the internal flow path 501, and a connection port 504 for connecting together the internal flow path 501 and the flow passageway 3, and is so configured as to be removable from the casing 7.

The fluid control unit 5 may include an air pump unit 51 for flowing the air into the flow passageway 3 and a syringe pump unit 52 for moving liquid inside the flow passageway 3.

The fluid control unit 5 may further comprise a diluting liquid temperature regulation unit 53 that preserves a diluting liquid for diluting the sample and regulates temperature of the diluting liquid.

The casing 7 may store a main wiring for supplying an electrical power to the units 3, 5, 6, and has a relay connector 73 for electrically connecting together the units 3, 5, 6 and the main wiring, the relay connector 73 being provided near a region where the units 3, 5, 6 are fitted.

The sample may be a blood specimen.

The present invention may be seen to simplify the assembly and the maintenance of a sample analyzer which may include a flow passageway 3 that flows fluid, such as a sample, air, or the like; one or more fluid control units 5 that control the flow of the fluid on the flow passageway 3; a measurement cell 41 that is provided on the flow passageway 3; a sample analysis part 6 that analyzes the sample inside the measurement cell 41; and a casing 7 that holds these parts mentioned above. At least one of the fluid control units 5 is formed by unitizing functions related to fluid control; integrally has a manifold 502 that forms an internal flow path 501, one or more control valves 503 that control flow of the fluid in the internal flow path 501 and connection ports 504 for connecting together the internal flow path 501 and the flow passageway 3; and is so configured as to be removable from the casing 7.

## Claims

1. Sample analyzer (1) comprising:
- a flow passageway (3) that flows fluid, such as a sample, air, or the like;
- one or more fluid control units (5) that control the flow of the fluid on the flow passageway (3);
- a measurement cell (41) that is provided on the flow passageway (3);
- a sample analysis part (6) that analyzes the sample inside the measurement cell (41); and
- a casing (7) that holds at least said flow passageway (3), said one or more fluid control units (5), said measurement cell (41), and said sample analysis part (6);
- wherein at least one of the fluid control units (5) is formed by unitizing functions related to fluid control, integrally has a manifold (502) that forms an internal flow path (501), one or more control valves (503) that control flow of the fluid in the internal flow path (501), and a connection port (504) for connecting together the internal flow path (501) and the flow passageway (3), and is so configured as to be removable from the casing (7).

2. Sample analyzer (1) according to claim 1,
wherein the fluid control unit (5) includes an air pump unit (51) for flowing the air into the flow passageway (3) and a syringe pump unit (52) for moving liquid inside the flow passageway (3).

3. Sample analyzer (1) according to claim 2,
wherein the fluid control unit (5) further comprises a diluting liquid temperature regulation unit (53) that preserves a diluting liquid for diluting the sample and regulates temperature of the diluting liquid.

4. Sample analyzer (1) according to any one of the preceding claims,
wherein the casing (7) stores a main wiring for supplying an electrical power to the units (3, 5, 6), and has a relay connector (73) for electrically connecting together the units (3, 5, 6) and the main wiring, the relay connector (73) being provided near a region where the units (3, 5, 6) are fitted.

5. Sample analyzer (1) according to any one of the preceding claims,
wherein the sample is a blood specimen.
